# EUROPEAN PATENT APPLICATION

(11) **EP 4 636 588 A1**
(43) Date of publication of application: **22.10.2025**
(21) Application number: 24757028.6
(22) Date of filing: 10.01.2024
(51) Int. Cl.: G06F 9/455, G06F 9/4401, H04L 41/08, G06F 3/048

(54) **MULTI-OS-BASED ELECTRONIC DEVICE AND METHOD FOR CONTROLLING SAME**

(30) Priority: 15.02.2023 KR 20230020051
(71) Applicant: Samsung Electronics Co., Ltd., Suwon-si, Gyeonggi-do 16677 (KR)
(72) Inventor: KIM, Boram, Suwon-si Gyeonggi-do 16677 (KR); KIM, Kyoungwon, Suwon-si Gyeonggi-do 16677 (KR); KIM, Minseok, Suwon-si Gyeonggi-do 16677 (KR); LEE, Daeyong, Suwon-si Gyeonggi-do 16677 (KR); IM, Kwanhyuk, Suwon-si Gyeonggi-do 16677 (KR)
(74) Representative: Appleyard Lees IP LLP
(86) International application number: PCT/KR2024/000500
(87) International publication number: WO 2024/172297

(57) **Abstract**

The disclosure provides an electronic apparatus and a method for controlling same. An electronic apparatus according to an embodiment of the disclosure comprises a memory in which host operation system (OS) information and sub OS information are stored, and one or more processors operating on the basis of at least one of a host OS and a sub OS. The one or more processors may, when a context related to a network configuration of the electronic apparatus is identified on the sub OS on the basis of a preconfigured event, deactivate a network configuration function of the sub OS, and change or maintain network configuration information of the host OS on the basis of the context.

## Description

### [Technical Field]

Apparatuses and methods consistent with the disclosure relate to an electronic apparatus and a method for controlling the same. More particularly, the disclosure relates to a multi-OS-based electronic apparatus and a method for controlling the same.

### [Background Art]

Recently, with the development of information and communication technology, virtualization technology has been applied to electronic apparatuss with physically limited resources, enabling more efficient use of the limited resources of electronic apparatuses. For example, it has become possible to run software based on different OSs on electronic apparatus with limited resources, enabling the provision of more extensive services to users.

Recently, a method of virtualizing an apparatus is widely used, such as a container method, which virtualizes only the process environment. In the case of the container method, unlike the existing virtual machine method, processes within the container are possible without a hardware emulator called a hypervisor, so the speed is fast and the resource efficiency of the electronic apparatus is also excellent.

### [Disclosure]

### [Technical Solution]

In accordance with an embodiment of the disclosure, an electronic apparatus includes a memory and one or more processors. The memory may store host operating system (OS) information and sub OS information. The one or more processors may be configured to operate based on at least one of the host OS and the sub OS. In addition, when a context related to a network configuration of the electronic apparatus is identified based on a preconfigured event, the one or more processors may be configured to deactivate a network configuration function of the sub OS and operate based on network configuration information of the host OS.

According to an example, when the network configuration information of the host OS is changed while the network configuration function of the sub OS is deactivated, the one or more processors may be configured to change the network configuration information of the sub OS based on the changed network configuration information.

According to an example, after the network configuration information of the host OS is changed from first network configuration information to second network configuration information, when the changed second network configuration information is restored to the first network configuration information within a critical time, the one or more processors may be configured to maintain the first network configuration information without changing the network configuration information of the sub OS to the second network configuration information.

According to an example, the one or more processors may be configured to identify the context related to the network configuration of the electronic apparatus while the electronic apparatus is booting or after the booting is completed, and deactivate the network configuration function of the sub OS based on the identified context.

According to an example, the one or more processors may be configured to identify the context related to the network configuration of the electronic apparatus when the sub OS is changed from a deactivated state to an activated state while the electronic apparatus is turned on, and deactivate the network configuration function of the sub OS when the identified context is identified as a context on the sub OS.

According to an example, the electronic apparatus may further include a display. In this case, the one or more processors may be configured to provide a UI for selecting whether to activate the network configuration function of the sub OS through the display, and provide a guide UI indicating that the network configuration function of the sub OS is deactivated when deactivation of the network configuration function of the sub OS is selected through the UI.

According to an example, the context related to the network configuration of the electronic apparatus may include at least one of a context in which an IP address is assigned to the electronic apparatus or a context in which communication is connected with an external apparatus.

According to an example, the network configuration information may include at least one of IP address information of the electronic apparatus, information on an external apparatus connected to the electronic apparatus, or a DNS server address of the electronic apparatus.

According to an example, the host OS and the sub OS may be different types of OS.

In accordance with another aspect of the disclosure, a method for controlling an electronic apparatus operating based on at least one of a host OS and a sub OS includes identifying a context related to a network configuration of the electronic apparatus on the sub OS based on a preconfigured event. In addition, the control method may include deactivating a network configuration function of the sub OS when a context related to the network configuration of the electronic apparatus is identified. In addition, the control method may include operating based on network configuration information of the host OS.

According to an example, the control method may further include changing the network configuration information of the sub OS based on the changed network configuration information when the network configuration information of the host OS is changed while the network configuration function of the sub OS is deactivated.

According to an example, in the changing, when the changed second network configuration information is restored to the first network configuration information within a critical time after the network configuration information of the host OS is changed from first network configuration information to second network configuration information, the first network configuration information may be maintained without the network configuration information of the sub OS being changed to the second network configuration information.

According to an example, in the identifying, the context related to the network configuration of the electronic apparatus may be identified when the electronic apparatus is booted.

According to an example, in the identifying, the context related to the network configuration of the electronic apparatus may be identified when the sub OS is changed from a deactivated state to an activated state while the electronic apparatus is turned on.

According to an example, the control method may further include providing a UI for selecting whether to activate the network configuration function of the sub OS through the display, and providing a guide UI indicating that the network configuration function of the sub OS is deactivated when the deactivation of the network configuration function of the sub OS is selected through the UI.

According to an example, the context related to the network configuration of the electronic apparatus may include at least one of a context in which an IP address is assigned to the electronic apparatus or a context in which communication is connected with an external device.

According to an example, the network configuration information may include at least one of IP address information of the electronic apparatus, information on an external device connected to the electronic apparatus, or a DNS server address of the electronic apparatus.

According to an example, the host OS and the sub OS may be different types of OS.

According to still another aspect of the disclosure, there is provided a non-transitory computer-readable recording medium storing a computer command that causes an electronic apparatus to perform an operation when executed by a processor of the electronic apparatus, in which the operation may include identifying a context related to a network configuration of the electronic apparatus on a sub OS based on a preconfigured event. In addition, the operation may include deactivating a network configuration function of the sub OS when a context related to the network configuration of the electronic apparatus is identified. In addition, the operation may include operating based on network configuration information of the host OS.

### [Description of Drawings]

FIG. 1 is a schematic exemplary diagram of an electronic apparatus according to an embodiment of the disclosure.
FIG. 2 is an exemplary diagram illustrating a multi-OS of an electronic apparatus and a container according to an embodiment of the disclosure.
FIG. 3 is a schematic configuration diagram of the electronic apparatus according to an embodiment of the disclosure.
FIG. 4 is a flowchart for describing a method for controlling an electronic apparatus according to an embodiment of the disclosure.
FIG. 5 is a flowchart for describing a method for controlling an electronic apparatus based on context information related to a network configuration identified on a sub OS according to an embodiment of the disclosure.
FIG. 6 is a flowchart for describing a method for controlling an electronic apparatus for applying network configuration information on a host OS to a sub OS according to an embodiment of the disclosure.
FIG. 7 is an exemplary diagram illustrating applying network configuration information on a host OS to a sub OS according to an embodiment of the disclosure.
FIG. 8 is an exemplary diagram illustrating a UI related to a network configuration function displayed on a sub OS according to an embodiment of the disclosure.
FIG. 9 is a detailed configuration diagram of the electronic apparatus according to an embodiment of the disclosure.

### [Mode for Invention]

After terms used in the present specification are briefly described, the disclosure will be described in detail.

General terms that are currently widely used were selected as terms used in exemplary embodiments of the disclosure in consideration of functions in the disclosure, but may be changed depending on the intention of those skilled in the art or a judicial precedent, the emergence of a new technique, and the like. In addition, in a specific case, terms arbitrarily chosen by an applicant may exist. In this case, the meaning of such terms will be mentioned in detail in a corresponding description portion of the disclosure. Therefore, the terms used in the disclosure should be defined on the basis of the meaning of the terms and the contents throughout the disclosure rather than simple names of the terms.

In the disclosure, an expression "have," "may have," "include," "may include," or the like, indicates existence of a corresponding feature (for example, a numerical value, a function, an operation, a component such as a part, or the like), and does not exclude existence of an additional feature.

In the disclosure, an expression "A or B," "at least one of A and/or B," "one or more of A and/or B," or the like, may include all possible combinations of items enumerated together. For example, "A or B," "at least one of A and B," or "at least one of A or B" may indicate all of 1) a case in which at least one A is included, 2) a case in which at least one B is included, or 3) a case in which both of at least one A and at least one B are included.

Expressions "first," "second," "1^{st}" or "2^{nd}" or the like, used in the disclosure may indicate various components regardless of a sequence and/or importance of the components, will be used only in order to distinguish one component from the other components, and do not limit the corresponding components.

When it is mentioned that any component (for example, a first component) is (operatively or communicatively) coupled with/to or is connected to another component (for example, a second component), it is to be understood that any component is directly coupled to another component or may be coupled to another component through the other component (for example, a third component).

An expression "configured (or set) to" used in the disclosure may be replaced by an expression "suitable for," "having the capacity to," "designed to," "adapted to," "made to, or "capable of' depending on a situation. A term "configured (or set) to" may not necessarily mean "specifically designed to" in hardware.

In some situations, an expression "~an apparatus configured to" may mean that the apparatus "is capable of' together with other apparatuses or components. For example, a "processor configured (or set) to perform A, B, and C" may mean a dedicated processor (for example, an embedded processor) for performing the corresponding operations or a generic-purpose processor (for example, a central processing unit (CPU) or an application processor) that may perform the corresponding operations by executing one or more software programs stored in a memory apparatus.

Singular forms are intended to include plural forms unless the context clearly indicates otherwise. It will be further understood that terms "include" or "formed of" used in the present specification specify the presence of features, numerals, steps, operations, components, parts, or combinations thereof mentioned in the present specification, but do not preclude the presence or addition of one or more other features, numerals, steps, operations, components, parts, or combinations thereof.

In exemplary embodiments, a 'module' or a 'portion' may perform at least one function or operation, and be implemented by hardware or software or be implemented by a combination of hardware and software. In addition, a plurality of "modules" or a plurality of "~ers/~ors" may be integrated in at least one module and be implemented by at least one processor (not illustrated) except for a "module" or a "~er/or" that needs to be implemented by specific hardware.

Meanwhile, various elements and regions in the drawings are schematically illustrated. Therefore, the spirit of the disclosure is not limited by relatively sizes or intervals illustrated in the accompanying drawings.

Hereinafter, an embodiment of the disclosure will be described in detail with reference to the accompanying drawings.

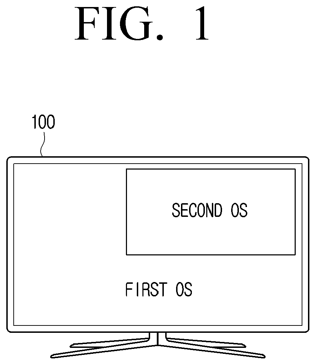

FIG. 1 is a schematic exemplary diagram of an electronic apparatus 100 according to an embodiment of the disclosure.

Referring to FIG. 1, the electronic apparatus 100 may be implemented as a TV, a smart TV, a laptop PC, a notebook, etc., but is not necessarily limited thereto.

According to an embodiment of the disclosure, the electronic apparatus 100 may operate based on a plurality of operating systems (OSs). Specifically, the electronic apparatus 100 may include an operating system (OS) that controls the hardware of the electronic apparatus 100 and provides a base environment for executing application software. The operating system may serve as an interface between the hardware of the electronic apparatus 100 and the application software.

The operating system may include a kernel that performs resource allocation for processes that constitute the operating system and applications, programs, etc., that are executed under the control of the operating system. The kernel may map and allocate resources of the electronic apparatus 100 to each middleware by connecting and managing interactions between physical components (e.g., hardware components) included in the electronic apparatus 100 and individual middleware of the operating system. In addition, the kernel may detect that each application or file is being executed.

For example, a specific application, program, etc., may be executed only on a specific OS. In this case, it was difficult for the existing electronic apparatus 100 with a single OS installed to provide functions and services through an application or program that may be operated or executed only on an OS other than the OS installed on the electronic apparatus 100. On the other hand, since the electronic apparatus 100 according to one embodiment of the disclosure has multiple different OSs installed, it may provide diverse and expanded services by providing users with programs, applications, etc., based on different OSs.

For example, at least one of the plurality of OSs may be installed in a virtualization space (or virtualization layer) included in the electronic apparatus 100. For example, one OS may be installed in the electronic apparatus 100, and the rest of the plurality of OSs may be installed in the virtual space generated by the electronic apparatus 100.

For example, the virtual space may be implemented as a virtual machine. The virtual machine is a software implementation of a computing environment, and may function as a platform for executing software based on the OS installed in the virtual machine.

In addition, the virtual space may be implemented as a container. The virtualization technology of the OS using the container refers to a technology that divides the inside of the host OS into a kernel space that manages physical resources and a user space that executes user processes, i.e., applications, and divides the user space into several parts to allocate and share the hardware resources of the electronic apparatus 100 as hardware resources used by each user process. Hereinafter, for the convenience of description, it is assumed that the virtual space is implemented as the container 200.

In FIG. 1, the first OS and the second OS are illustrated, but the first OS may mean the host OS of the electronic apparatus 100, and the second OS may mean the sub OS of the container 200 included in the electronic apparatus 100.

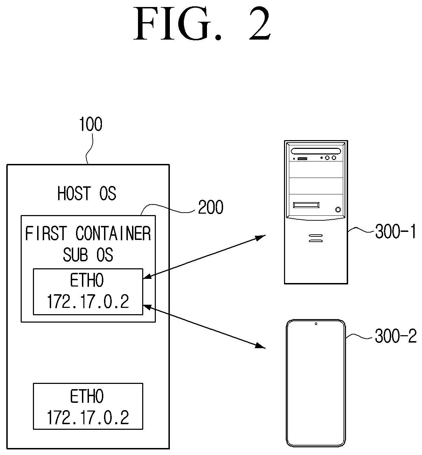

FIG. 2 is an exemplary diagram illustrating a multi-OS of the electronic apparatus 100 and the container 200 according to an embodiment of the disclosure.

Referring to FIG. 2, according to an embodiment of the disclosure, the electronic apparatus 100 may include a virtualization container (hereinafter, "container"). That is, the electronic apparatus 100 may be a host device and may generate a container 200 based on a docker. As illustrated in FIG. 2, the virtualization space may share the kernel resources of the operating system of the electronic apparatus 100, but may include separate applications and libraries, middleware, etc., for executing each application.

Meanwhile, according to one embodiment of the disclosure, different OSs may be installed on the electronic apparatus 100 and the container 200. This is to provide users with not only the OS based on the electronic apparatus 100 but also other OS-based services, functions, etc., through the electronic apparatus 100, as described above. The OS may include Tizen^{™}, Android^{™}, Linux^{™}, MAC OS^{™}, UNIX^{™}, etc. Different OSs may be installed on the electronic apparatus 100 and the container 200 depending on the function and purpose of the electronic apparatus 100. For example, the Tizen^{™} may be installed on the electronic apparatus 100 and the Android^{™} may be installed on the container 200.

Accordingly, basic control operations (e.g., turning on/off, volume control, initialization, etc. of the electronic apparatus 100) of the electronic apparatus 100 may be performed on Tizen. In this case, the electronic apparatus 100 may provide users with not only Tizen-based functions and services but also Android-based functions and services through various Android^{™}-based applications, programs, etc., installed in the container 200.

Meanwhile, according to one embodiment of the disclosure, the sub OS of the container 200 included in the electronic apparatus 100 may share the host OS of the electronic apparatus and the network environment of the electronic apparatus 100 (e.g., the network interface (or communication interface) of the electronic apparatus, the IP address set in the electronic apparatus, etc.).

Specifically, when the network mode of the container 200 is set to the host mode, the sub OS of the container 200 may communicate with the external device 300 using the network interface of the electronic apparatus 100, and the container 200 may share the same IP address as the electronic apparatus 100.

Therefore, unlike a bridge mode in which a virtual IP address is generated by the docker and assigned to the container, in the host mode, the external device 300 may establish a network connection with the electronic apparatus 100 on the sub OS of the container 200 through an IP address and a network interface of the electronic apparatus 100. However, in the host mode, the network configuration (or environment) of the electronic apparatus 100 may be changed depending on the operation of the sub OS of the container 200. That is, even if the user doesn't intend, the network configuration (or environment) of the host OS of the electronic apparatus 100 that the user mainly uses may be changed by the operation (or use) of the sub OS of the container 200.

The electronic apparatus 100 according to an embodiment of the disclosure sets the network mode of the container 200 generated by the electronic apparatus 100 to the host mode, and at the same time, prevents the network configuration (or environment) of the electronic apparatus 100 from being changed depending on the operation of the sub OS of the container 200. Hereinafter, an embodiment of the disclosure related thereto will be described.

Meanwhile, in FIG. 2, the electronic apparatus 100 is illustrated as including the container 200 which is one virtualization space, but this is only one embodiment, and it is obvious that the container may be included in a plurality of virtualization spaces.

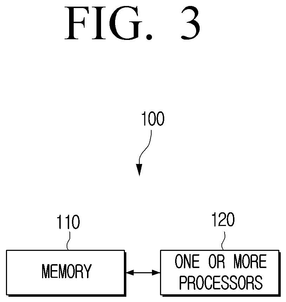

FIG. 3 is a schematic configuration diagram of the electronic apparatus 100 according to an embodiment of the disclosure.

The electronic apparatus 100 includes a memory 110 and one or more processors 120.

The memory 110 may store instructions and programs related to at least one other component of the electronic apparatus 100. An instruction means one action statement for one or more processors 120 in a programming language. In addition, the program includes an application program for providing a specific service, as well as an OS for running the application program.

According to an embodiment, the memory 110 may be implemented as a nonvolatile memory 110, a volatile memory, a flash memory, a hard disk drive (HDD), a solid state drive (SSD), etc. The memory 110 is accessed by the processor 120, and readout, recording, correction, deletion, update, and the like, of data may be performed by the processor 120.

In the disclosure, the term 'memory 110' includes the memory 110, a read only memory (ROM) (not illustrated) in the processor 120, a random access memory (RAM), or a memory card (not illustrated) (for example, a micro secure digital (SD) card or a memory stick) mounted in the electronic apparatus 100.

In addition, the memory 110 may store host OS information and sub OS information. Specifically, the memory 110 may store information related to the host OS, including a host OS program, a host OS library, etc. Additionally, the memory 110 may store information related to the sub OS, including sub OS programs, sub OS libraries, etc. In one example, the sub OS may be executed on the container 200, and the memory 110 may store a docker image file related to the container 200.

One or more processors 120 according to an embodiment of the disclosure are electrically connected to the memory 110 to control the overall operation and function of the electronic apparatus 100.

One or more processors 120 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. One or more processors 120 may control one or any combination of other components of the electronic apparatus 100 and may perform operations related to communication or data processing. One or more processors 120 may execute one or more programs or instructions stored in the memory 110. For example, one or more processors 120 may perform a method according to an embodiment of the disclosure by executing one or more instructions stored in memory 110.

When the method according to an embodiment of the disclosure includes multiple operations, the multiple operations may be performed by one processor or by multiple processors. For example, when a first operation, a second operation, and a third operation are performed by the method according to an embodiment, the first operation, the second operation, and the third operation may all be performed by the first processor, or the first operation and the second operation may be performed by the first processor (e.g., a general-purpose processor) and the third operation may be performed by the second processor (e.g., an AI-dedicated processor).

The one or more processors 120 may be implemented as a single core processor including one core, or may be implemented as one or more multicore processors including multiple cores (e.g., a homogeneous multicore or a heterogeneous multicore). When one or more processors 120 are implemented as a multi-core processor, each of the plurality of cores included in the multi-core processor may include an internal processor 120 memory such as cache memory and on-chip memory, and a common cache shared by the plurality of cores may be included in the multi-core processor. In addition, each of the plurality of cores (or some of the plurality of cores) included in the multi-core processor may independently read and execute a program command for implementing the method according to an embodiment of the disclosure, or all (or some) of the plurality of cores may be linked to read and execute the program command for implementing the method according to an embodiment of the disclosure.

When the method according to an embodiment of the disclosure includes a plurality of operations, the plurality of operations may be performed by one of the plurality of cores included in the multi-core processor, or may be performed by the plurality of cores. For example, when the first operation, the second operation, and the third operation are performed by the method according to an embodiment, the first operation, the second operation, and the third operation may all be performed by a first core included in the multi-core processor, or the first operation and the second operation may be performed by the first core included in the multi-core processor, and the third operation may be performed by a second core included in the multi-core processor.

In the embodiments of the disclosure, the processor 120 may mean a system on chip (SoC) in which one or more processors and other electronic components are integrated, a single core processor, a multi-core processor, or a core included in the single core processor or the multi-core processor. Here, the core may be implemented as the CPU, the GPU, the APU, the MIC, the DSP, the NPU, the hardware accelerator, the machine learning accelerator, etc., but the embodiments of the disclosure are not limited thereto. Hereinafter, for convenience of description, one or more processors 120 will be referred to as the processor 120.

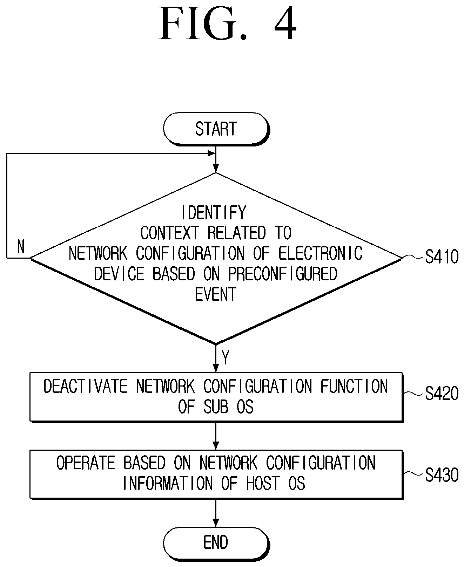

FIG. 4 is a flowchart for describing a method for controlling an electronic apparatus according to an embodiment of the disclosure.

According to an embodiment, the electronic apparatus 100 may operate based on at least one of the host OS and the sub OS. According to an example, the host OS is an OS installed in the physical space of the electronic apparatus 100, and the sub OS is an OS installed in the virtualization space of the electronic apparatus 100, but is not limited thereto. Meanwhile, the network mode of the container 200 may be a host mode.

According to an embodiment illustrated in FIG. 4, the processor 120 may identify whether the context of the electronic apparatus 100 is a context related to network configuration based on a preconfigured event (S410). Here, the preconfigured event may be an event that occurs on the electronic apparatus 100 through at least one of the host OS and the sub OS. For example, the preconfigured event may include at least one event of booting, turning on, entering a preset menu, and activating the sub OS of the electronic apparatus 100.

According to an example, the context of the electronic apparatus 100 may include various situations such as configuration information of the electronic apparatus 100, a function executed in the electronic apparatus 100, and a communication status of the electronic apparatus 100 when the preconfigured event occurs. In addition, the context related to the network configuration may include various situations in which an operation or function for setting or changing a network is being executed or may be executed, such as a situation in which the information related to the network configuration is included in the configuration information, a situation in which network configuration is required, a situation in which a function related to the current network configuration is being executed, etc.

In addition, the context related to the network configuration may be identified in at least one of the host OS or the sub OS. For example, the host OS may identify whether the current context is the context related to the network configuration based on the configuration information. Alternatively, the sub OS may identify whether the current context is the context related to the network configuration based on the configuration information.

When the context of the electronic apparatus 100 is identified as the context related to the network configuration (S410:Y), the processor 120 may deactivate the network configuration function of the sub OS (S420).

Here, the network configuration function may be a function for actively setting up or changing a network through the communication interface of the electronic apparatus 100 in the OS, respectively. For example, a user may execute a network connection between the electronic apparatus 100 and the external electronic apparatus 100 on the sub OS through the network configuration function of the sub OS. Alternatively, the user may change the IP address of the electronic apparatus 100 on the sub OS or receive the IP address for the electronic apparatus 100 from an access point (AP) device through the network configuration function of the sub OS.

Meanwhile, the network configuration function may be dynamically activated or deactivated on the sub OS. That is, the processor 120 may dynamically activate or deactivate the network configuration function of the sub OS. Specifically, the network configuration function of the sub OS may be deactivated by deactivating a control groups (Cgroups) function related to the network of the electronic apparatus 100 of the sub OS.

When the processor 120 deactivates the network configuration function of the sub OS, the user may not execute or change the network configuration of the electronic apparatus 100 through the sub OS. For example, UI, GUI, connection manager software, etc., related to the network configuration of the electronic apparatus 100 may be deactivated in the sub OS. In this case, the processor 120 may not change the network configuration of the electronic apparatus 100 through the sub OS. For example, even when an external electronic apparatus 100 based on Bluetooth communication registered (or pre-paired) in the sub OS is detected, the processor 120 may not perform Bluetooth communication with the external electronic apparatus 100 on the sub OS (i.e., a network connection based on Bluetooth communication).

Subsequently, the processor 120 may operate based on the network configuration information of the host OS (S430). In particular, the network environment of the electronic apparatus may be changed by changing the network configuration only on the first OS.

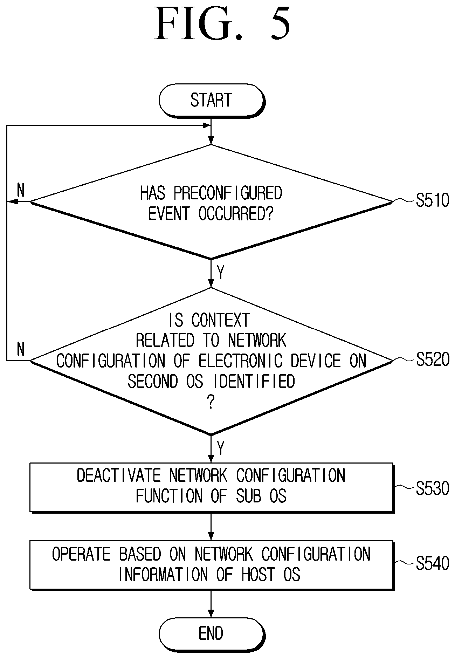

For example, according to the user control command input through the first OS, the processor 120 may execute a network connection between the electronic apparatus 100 and the external electronic apparatus 300, or may request the external electronic apparatus 300 to transmit a dynamic IP address allocated to the electronic apparatus 100. In addition, the processor 120 may provide an application, a program, a UI, etc., that allows the user to change the network configuration of the electronic apparatus 100 through the first OS. That is, the network configuration of the electronic apparatus may be changed only on the first OS, because the network configuration function of the second OS is deactivated in step S420 as described above. FIG. 5 is a flowchart for describing a method for controlling an electronic apparatus based on context information related to a network configuration identified on the sub OS according to an embodiment of the disclosure.

S530 and S540 illustrated in FIG. 5 may correspond to S420 and S430 illustrated in FIG. 4, respectively. Therefore, a detailed description thereof will be omitted.

According to an example illustrated in FIG. 5, the processor 120 may identify whether the preconfigured event has occurred (S510). For example, the processor 120 may identify that the preconfigured event has occurred in the electronic apparatus 100 when the electronic apparatus 100 is booted (more specifically, when the host OS of the electronic apparatus 100 is executed as the electronic apparatus 100 is booted).

In addition, the processor 120 may identify that the preconfigured event has occurred in the electronic apparatus 100 when the electronic apparatus 100 in the standby state is turned on. For example, the processor 120 may identify that the preconfigured event has occurred in the electronic apparatus 100 when the electronic apparatus 100 in the standby mode on the sub OS is turned on based on the input user control command on the sub OS or a wake-up signal received by the electronic apparatus 100 on the sub OS.

According to an embodiment of the disclosure, when it is identified that the preconfigured event has occurred in the electronic apparatus 100, the processor 120 may identify the context related to the network configuration of the electronic apparatus 100 on the sub OS (S520).

Here, the context related to the network configuration on the sub OS is information related to executing or changing the network configuration of the electronic apparatus 100 on the sub OS, and when it is identified that the user on the sub OS attempts the network connection between the electronic apparatus 100 and the external device 300 or changes the network configuration of the electronic apparatus 100, the processor 120 may detect the context related to the network configuration on the sub OS.

As described above, changing the network configuration of the electronic apparatus 100 may include allocating the IP address from the external device 300 (e.g., an AP device, an ISP server, etc.) or changing the IP address set in the electronic apparatus 100.

That is, when the preconfigured event is detected on the electronic apparatus 100, the processor 120 may identify the context related to the network configuration of the electronic apparatus 100 on the sub OS (S520). When the processor 120 identifies that the context information on the sub OS is the context related to the network configuration of the electronic apparatus (S502:Y), the processor 120 may deactivate the network configuration function of the sub OS (S530).

For example, the processor 120 may identify that the preconfigured event has occurred in the electronic apparatus 100 when the electronic apparatus 100 is turned on or booted, and may identify whether the context related to the network configuration of the electronic apparatus 100 has occurred on the sub OS. In this case, when the processor 120 identifies that the context related to the network configuration of the electronic apparatus 100 has occurred on the sub OS, the processor 120 may deactivate the network configuration function of the sub OS (S530). On the other hand, when the processor 120 identifies that the context related to the network configuration of the electronic apparatus 100 has not occurred on the sub OS, the processor 120 may continuously maintain the network configuration function of the sub OS in the activated state even when the preconfigured event has occurred.

For example, when a first application running on the sub OS is set to run when the electronic apparatus 100 is booted, and the first application performs an operation based on the network connection with the external device 300, the processor 120 may identify that the preconfigured event has occurred in the electronic apparatus 100 as the electronic apparatus 100 is booted. In this case, when the first application is run on the sub OS, or when the network connection with the external device 300 is attempted as the first application is run, the processor 120 may detect the context related to the network configuration on the sub OS. Accordingly, the processor 120 may deactivate the network configuration function of the sub OS.

This is to prevent the network configuration of the electronic apparatus from being changed through the sub OS. In particular, in order to prevent the network environment of the electronic apparatus set in response to the host OS of the electronic apparatus from being changed to correspond to the sub OS, the processor may continuously identify whether the context related to the network configuration of the electronic apparatus on the second OS has occurred when the preconfigured event occurs and then deactivate the network configuration function of the second OS.

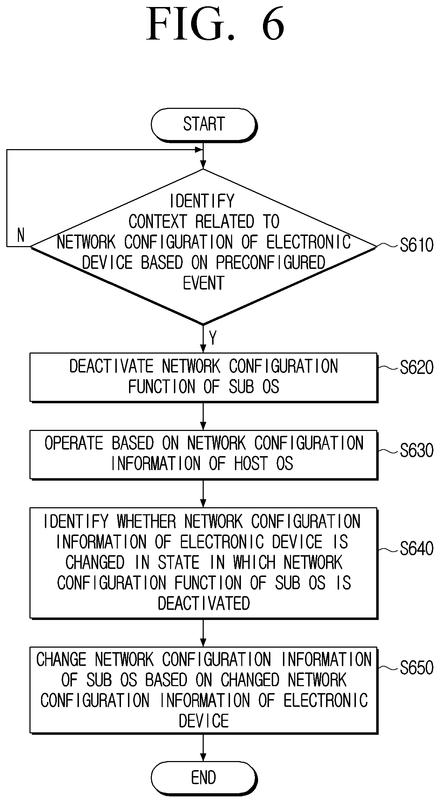

FIG. 6 is a flowchart for describing a method for controlling an electronic apparatus for applying network configuration information on a host OS to a sub OS according to an embodiment of the disclosure.

Meanwhile, according to an embodiment of the disclosure, when the network configuration information of the host OS is changed while the network configuration function of the sub OS is deactivated, the processor 120 may change the network configuration information of the sub OS based on the changed network configuration information.

Specifically, while the processor 120 operates based on the network configuration information of the host OS (i.e., while the network configuration function of the sub OS is deactivated) (S630), the processor 120 may identify whether the network configuration information of the electronic apparatus 100 has been changed (S640). In this case, the change of the network configuration information of the electronic apparatus 100 may be executed on the host OS. For example, when the electronic apparatus 100 is connected to the external device 300 through the network or allocated the IP address for the electronic apparatus 100 on the host OS, the processor 120 may identify that the network configuration information of the electronic apparatus 100 has been changed. In particular, since the network configuration function of the sub OS is deactivated, the setting and change of the network of the electronic apparatus 100 may also be executed through the host OS. For example, the user may set the network environment of the electronic apparatus 100 and change the preset network information through the network configuration function (e.g., network configuration program, UI, etc.) provided by the host OS.

In this case, when the processor 120 identifies that the network configuration information has been changed, the processor 120 may change the network configuration information of the sub OS based on the changed network configuration information of the electronic apparatus 100 (S650).

According to an embodiment of the disclosure, the processor 120 may change the network configuration of the sub OS to be identical to the network configuration of the host OS based on the changed network configuration information of the electronic apparatus 100. Here, the network configuration information may include IP address information of the electronic apparatus 100, information of the external device 300 connected to the electronic apparatus 100, or a DNS server address of the electronic apparatus 100.

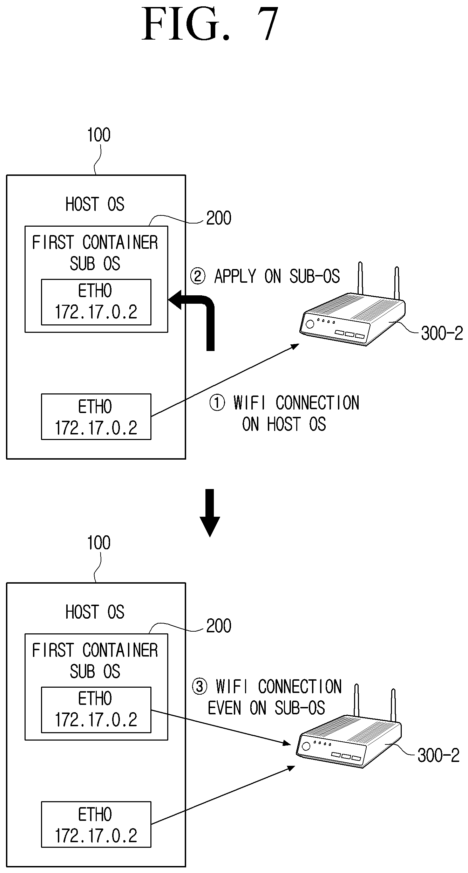

Specifically, the processor 120 may apply the changed network configuration of the electronic apparatus 100 on the sub OS. For example, referring to FIG. 7, when the electronic apparatus 100 is connected to an external device 300-2 on the host OS, the processor 120 may equally apply the network configuration information of the host OS to the sub OS. That is, the processor 120 may synchronize the network configuration of the electronic apparatus on the host OS and the network configuration of the electronic apparatus on the sub OS. For example, when a WIFI connection is established with a router 200-2 as the external device on the host OS, the processor 120 may obtain an address for the WIFI connection with the router 200-2 and share the obtained address with the sub OS. In other words, the processor 120 may share the address for the WIFI connection with the router 200-2 obtained through the host OS with the sub OS so that the WIFI communication is possible through the router 200-2 even on the sub OS.

Accordingly, the processor may change the network configuration information of the sub OS so that the external device 300-2 connected on the host OS is connected to the electronic apparatus 100 even on the sub OS.

In addition, when the electronic apparatus 100 is connected to the external device 300 on the host OS via Bluetooth, the processor 120 may synchronize the network configuration so that the Bluetooth connection is established with the external device 300 connected on the host OS even on the sub OS. In this case, the processor 120 may share an address for Bluetooth communication connection acquired through the host OS during the Bluetooth connection process with the sub OS. For example, the processor 120 may share the MAC address of the external device 300 received from the external device 300 on the host OS during the Bluetooth connection process with the sub OS, thereby performing the Bluetooth communication with the external device 300 on the sub OS.

Alternatively, when the electronic apparatus 100 is allocated the dynamic IP address from the external device 300 (e.g., an ISP server, etc.) on the host OS, the processor 120 may apply the IP address of the electronic apparatus 100 on the sub OS to the dynamic IP address allocated on the host OS.

To this end, the processor 120 may compile a command for changing the network configuration information based on the language of the sub OS and execute the compiled command on the sub OS. That is, as the network configuration function of the sub OS is deactivated, the active change of the network configuration on the sub OS is limited, but the processor 120 may generate the command that may be executed on the sub OS based on the network configuration information on the host OS to change the network configuration on the sub OS to match the host OS.

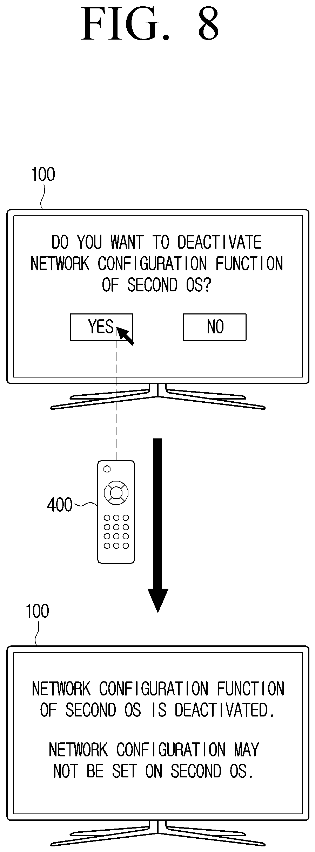

FIG. 8 is an exemplary diagram illustrating a UI related to a network configuration function displayed on the sub OS according to an embodiment of the disclosure.

Meanwhile, according to an embodiment of the disclosure, the processor 120 provides a UI for selecting whether to activate the network configuration function of the sub OS through the display, and when the deactivation of the network configuration function of the sub OS is selected through the UI, a guide UI indicating that the network configuration function of the sub OS is deactivated may be provided.

Specifically, the processor 120 may deactivate the sub OS network configuration function according to the user control command. In some cases, the user may need to actively connect to the network with the external device 300 while executing the application, the program, etc., based on the sub OS on the sub OS. Alternatively, even when the preconfigured event does not occur, the user may not want the network configuration of the electronic apparatus 100 to be changed while executing a sub OS-based application, programs, etc., on the sub OS.

Accordingly, referring to FIG. 8, the processor 120 may display the UI on the display of the electronic apparatus 100 so that the sub OS network configuration function deactivated by the user may be activated or the sub OS network configuration function activated by the user may be deactivated.

In this case, when the preconfigured event is detected, the processor 120 may display the UI related to the network configuration when the context related to the network configuration of the electronic apparatus 100 on the sub OS is detected. For example, the processor 120 may display the UI related to the network configuration on the host OS when the electronic apparatus 100 is booted.

Alternatively, the UI related to the network configuration function may be displayed on the display by the processor 120 when a control command is input through a key corresponding to the network configuration function, the key being arranged on the interface of the electronic device 100 or on the remote control 400 that is linked with the electronic device 100.

Meanwhile, when the deactivation of the network configuration function of the sub OS is selected through the UI related to the network configuration displayed on the display, the processor 120 may provide the guide UI indicating that the network configuration function of the sub OS is deactivated.

Referring back to FIG. 8, the guide UI indicating that the network configuration function of the sub OS is deactivated may include a message indicating that the network configuration function of the sub OS is deactivated and a message indicating that the network configuration may not be executed or changed through the network configuration function of the sub OS. Through this, the electronic apparatus 100 may enable the user to recognize that the network configuration of the electronic apparatus 100 may not be changed or the network connection with the external device 300 may not be executed while the user is executing an application, programs, etc., on the sub OS.

Meanwhile, according to an embodiment of the disclosure, when the network configuration information on the host OS is changed, the processor 120 may change the network configuration information on the sub OS after the critical time has elapsed. In this case, when the network configuration information of the host OS is changed from the first network configuration information to the second network configuration information and the second network configuration information changed within the critical time is restored to the first network configuration information, the processor 120 may not change the network configuration information of the sub OS to the second network configuration information and may maintain the first network configuration information.

Specifically, when the processor 120 detects that the network configuration information in the host OS is changed, it may identify whether the network configuration information changed during the critical time is changed again. For example, when the external device 300 and the electronic apparatus 100 are connected via Bluetooth based on the input user control command on the host OS, the processor 120 may identify that the network configuration information about the electronic apparatus 100 on the host OS has been changed. In this case, when the critical period of time is 1 sec, the processor 120 may change the network configuration information of the sub OS so that the external device 300 and the electronic apparatus 100 are connected via Bluetooth on the sub OS based on the changed network configuration information after 1 sec has elapsed.

Meanwhile, when the processor 120 identifies that the changed network configuration information has been restored to the previous network configuration information before 1 sec has elapsed after the network configuration information of the host OS has been changed, it may not change the second network configuration information. To explain again with the above-described example, when the Bluetooth connection between the external device 300 and the electronic apparatus 100 is released based on another control command of the user input on the host OS again before the critical time of 1 sec has elapsed after the external device 300 and the electronic apparatus 100 are connected via Bluetooth on the host OS based on the user control command input, the processor 120 may not change the network connection on the sub OS. That is, the processor 120 may maintain the network configuration information of the sub OS while the Bluetooth connection between the electronic apparatus 100 and the external device 300 is not established on the sub OS.

The processor 120 may not apply unnecessary network configuration changes on the host OS to the sub OS, thereby preventing unnecessary resource waste of the electronic apparatus 100 without performing unnecessary processes.

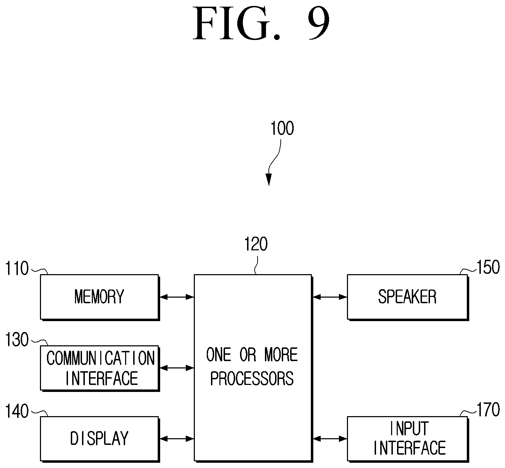

FIG. 9 is a detailed configuration diagram of the electronic apparatus according to an embodiment of the disclosure.

The electronic apparatus 100 includes a memory 110, a communication interface 130, a display 140, a speaker 150, an input interface 160, and one or more processors 120. A detailed description of the memory 110 and one or more processors 120 illustrated in duplicate with FIG. 2 will be omitted.

The communication interface 130 may include various communication modules to perform communication with an external device. For example, the communication unit may include a wireless communication module, and may include a cellular communication module using at least one of LTE, LTE Advance (LTE-A), 5th generation (5G), code division multiple access (CDMA), wideband CDMA (WCDMA), universal mobile telecommunications system (UMTS), wireless Broadband (WiBro), or Global System for Mobile Communications (GSM), etc.

As another example, the wireless communication module may include at least one of, for example, wireless fidelity (WiFi), Bluetooth, Bluetooth low energy (BLE), Zigbee, or radio frequency (RF).

In particular, the processor 120 may be assigned an IP address from an external device through a communication interface 130 or may be connected to the external device.

The display 140 may display various types of information according to the control of the processor 120. In particular, the processor 120 may display a UI for selecting whether to activate the network configuration function of the sub OS on the display 140. In addition, the processor 120 may display a guide UI indicating that the network configuration function of the sub OS is deactivated on the display 140.

Meanwhile, the display 140 may be implemented as a touch screen with a touch panel or as a flexible display 140. When the display 140 is implemented as the touch screen, the display 140 may function as an input interface that receives a touch input as well as an output interface that displays various types of information.

The speaker 150 may output various audio data that have undergone various processing operations, such as decoding, amplification, and noise filtering, by the audio processing unit, as well as various notification sounds or voice messages.

The input interface 160 may receive user input for controlling the electronic apparatus 100. In particular, the input unit may be implemented as a touch panel, a button, or the like. The input interface 160 may receive user input for changing the network configuration of the electronic apparatus 100.

Meanwhile, the above-described methods according to various embodiments of the disclosure may be implemented in a form of application that may be installed in the existing electronic apparatus. Alternatively, the above-described methods according to various embodiments of the disclosure may be performed using a deep learning-based artificial neural network (or deep artificial neural network), that is, a learning network model.

In addition, the above-described methods according to various embodiments of the disclosure may be implemented only by software upgrade or hardware upgrade of the existing electronic apparatus.

In addition, various embodiments of the disclosure described above can be performed through an embedded server provided in the electronic apparatus or a server outside the electronic apparatus.

Meanwhile, according to an embodiment of the disclosure, various embodiments described above may be implemented by software including instructions stored in machine-readable storage media (for example, a computer-readable storage media). A machine may be an apparatus that invokes the stored instruction from the storage medium and may be operated depending on the invoked instruction, and may include the electronic apparatus (for example, the electronic apparatus A) according to the disclosed embodiments. In the case in which a command is executed by the processor, the processor may directly perform a function corresponding to the command or other components may perform the function corresponding to the command under a control of the processor. The command may include codes created or executed by a compiler or an interpreter. The machine-readable storage medium may be provided in a form of a non-transitory storage medium. Here, the term "non-transitory" means that the storage medium is tangible without including a signal, and does not distinguish whether data are semi-permanently or temporarily stored in the storage medium.

In addition, according to an embodiment of the disclosure, the above-described methods according to the diverse embodiments may be included and provided in a computer program product. The computer program product may be traded as a product between a seller and a purchaser. The computer program product may be distributed in a form of a storage medium (for example, a compact disc read only memory (CD-ROM)) that may be read by the machine or online through an application store (for example, PlayStore^{™}). In case of the online distribution, at least a portion of the computer program product may be at least temporarily stored in a storage medium such as a memory of a server of a manufacturer, a server of an application store, or a relay server or be temporarily generated.

In addition, each of components (for example, modules or programs) according to various embodiments described above may include a single entity or a plurality of entities, and some of the corresponding sub-components described above may be omitted or other sub-components may be further included in the diverse embodiments. Alternatively or additionally, some components (e.g., modules or programs) may be integrated into one entity and perform the same or similar functions performed by each corresponding component prior to integration. Operations performed by the modules, the programs, or the other components according to the diverse embodiments may be executed in a sequential manner, a parallel manner, an iterative manner, or a heuristic manner, at least some of the operations may be performed in a different order or be omitted, or other operations may be added.

Although embodiments of the disclosure have been illustrated and described hereinabove, the disclosure is not limited to the above-described specific embodiments, but may be variously modified by those skilled in the art to which the disclosure pertains without departing from the gist of the disclosure as disclosed in the accompanying claims. These modifications should also be understood to fall within the scope and spirit of the disclosure.

## Claims

1. An electronic apparatus, comprising:
a memory configured to store host operating system (OS) information and sub OS information; and
one or more processors configured to operate based on at least one of the host OS and the sub OS,
wherein the one or more processors are configured to deactivate a network configuration function of the sub OS when a context related to the network configuration of the electronic apparatus is identified based on a preconfigured event, and
change or maintain network configuration information of the host OS based on the context.

2. The electronic apparatus as claimed in claim 1, wherein, when the network configuration information of the host OS is changed while the network configuration function of the sub OS is deactivated, the one or more processors are configured to change the network configuration information of the sub OS based on the changed network configuration information.

3. The electronic apparatus as claimed in claim 2, wherein, after the network configuration information of the host OS is changed from first network configuration information to second network configuration information, when the changed second network configuration information is restored to the first network configuration information within a critical time, the one or more processors are configured to maintain the first network configuration information without changing the network configuration information of the sub OS to the second network configuration information.

4. The electronic apparatus as claimed in claim 1, wherein the one or more processors are configured to identify the context related to the network configuration of the electronic apparatus when the electronic apparatus is booted, and
deactivate the network configuration function of the sub OS based on the identified context.

5. The electronic apparatus as claimed in claim 1, wherein, when the sub OS is changed from a deactivated state to an activated state while the electronic apparatus is turned on, the one or more processors are configured to identify the context related to the network configuration of the electronic apparatus, and
when the identified context is identified as a context on the sub OS, deactivate the network configuration function of the sub OS.

6. The electronic apparatus as claimed in claim 1, further comprising:
a display,
wherein the one or more processors are configured to provide a UI for selecting whether to activate the network configuration function of the sub OS through the display, and
provide a guide UI indicating that the network configuration function of the sub OS is deactivated when deactivation of the network configuration function of the sub OS is selected through the UI.

7. The electronic apparatus as claimed in claim 1, wherein the context related to the network configuration of the electronic apparatus includes at least one of a context in which an IP address is assigned to the electronic apparatus or a context in which communication is connected with an external device.

8. The electronic apparatus as claimed in claim 1, wherein the network configuration information includes at least one of IP address information of the electronic apparatus, information on an external device connected to the electronic apparatus, or a DNS server address of the electronic apparatus.

9. The electronic apparatus as claimed in claim 1, wherein the host OS and the sub OS are different types of OS.

10. A method for controlling an electronic apparatus operating based on at least one of a host OS and a sub OS, the method comprising:
identifying a context related to a network configuration of the electronic apparatus based on a preconfigured event;
deactivating a network configuration function of the sub OS when a context related to the network configuration of the electronic apparatus is identified; and
changing or maintaining network configuration information of the host OS based on the context.

11. The method as claimed in claim 10, further comprising:
changing the network configuration information of the sub OS based on the changed network configuration information when the network configuration information of the host OS is changed while the network configuration function of the sub OS is deactivated.

12. The method as claimed in claim 11, wherein, in the changing, when the changed second network configuration information is restored to the first network configuration information within a critical time after the network configuration information of the host OS is changed from first network configuration information to second network configuration information, the first network configuration information is maintained without the network configuration information of the sub OS being changed to the second network configuration information.

13. The method as claimed in claim 10, wherein, in the identifying, the context related to the network configuration of the electronic apparatus is identified when the electronic apparatus is booted.

14. The method as claimed in claim 10, wherein, in the identifying, the context related to the network configuration of the electronic apparatus is identified when the sub OS is changed from a deactivated state to an activated state while the electronic apparatus is turned on.

15. A non-transitory computer-readable recording medium storing a computer command that causes an electronic apparatus to perform an operation when executed by a processor of the electronic apparatus, wherein the operation includes:
identifying a context related to a network configuration of the electronic apparatus on a sub OS based on a preconfigured event;
deactivating a network configuration function of the sub OS when a context related to the network configuration of the electronic apparatus is identified; and
changing or maintaining network configuration information of the host OS based on the context.
